# EUROPEAN PATENT SPECIFICATION

(11) **EP 1 896 923 B1**
(45) Date of publication and mention of the grant of the patent: **27.01.2010**
(21) Application number: 06755571.4
(22) Date of filing: 21.06.2006
(51) Int. Cl.: G06F 1/26

(54) **SOCKET ASSEMBLY WITH STANDBY SOCKETS**
SOCKELBAUGRUPPE MIT STANDBY-SOCKELN
ENSEMBLE PRISE FEMELLE PRESENTANT DES PRISES FEMELLES DE RESERVE

(30) Priority: 21.06.2005 GB 0512618
(43) Date of publication of application: 12.03.2008
(73) Proprietor: One Click (IP) Limited, Annesley Nottingham NG15 0HT (GB)
(72) Inventor: ROBERTSON, Peter, Steven, Toton, Nottingham NG9 6LH (GB); BROWNE, Ian, Nottinghamshire NG17 9JR (GB)
(74) Representative: Johnstone, Helen Margaret
(86) International application number: PCT/GB2006/002259
(87) International publication number: WO 2006/136812

(56) References cited:
- GB-A- 2 386 004
- GB-B- 2 398 441
- US-A1- 2003 102 717
- US-B1- 6 501 195

## Description

The present invention relates to socket assemblies and their use in the supply of electrical power to suites of master and peripheral devices.

In modem homes and offices, suites of electrical devices have become commonplace for both recreational and work purposes. Such suites of devices typically include at least one master device and a plurality of peripheral devices coupled to one or more of the master devices for communication therebetween. Examples of such devices include those for home entertainment, such as televisions, digital versatile disc (DVD) players, video-cassette recorders (VCRs), set-top boxes and personal video recorders (PVRs) etc. and those relating to home computing, such as personal computers (PCs), printers, modems and scanners etc.

Each device in a suite typically requires its own connection to a mains electrical power supply. Consequently, it is common for such a suite of devices to be connected to the mains via a conventional multi-way electrical socket bank, typically having 2-, 4-, 6- or 8- (or more) outlets. While these socket banks can overcome the difficulty of providing sufficient power connections for the suite of devices, they do not provide any control over the provision of power to the peripheral devices in response to changes in the operating state of the master device.

This problem has been addressed by the socket assemblies of co-pending application GB2386004 and granted patent GB2398441, both in the name of Peter Robertson. Using these assemblies, peripheral devices can be powered down (i.e. turned off) when a change in operating state of the master device is sensed, by monitoring the power drawn through a master electrical outlet of the socket assembly, thereby allowing the whole suite of devices to be turned off when the master device is turned off, or placed into a standby state.

However, in some suites of devices, powering down each of the peripheral devices can be disadvantageous, as certain devices require at least a low level of power to be maintained during periods of inactivity. In particular, some set-top boxes are prone to automatic "locking" if they are without power for an expended period of time, and other devices which have volatile storage (e.g. VCRs) can typically lose user defined settings and/or programmed instructions if they are turned off altogether. The upshot of this can be that such peripheral devices are unable to return to a subsequent operating state, when power is again restored, as the device may be locked or else awaits start-up instructions from a user (e.g. clock settings etc.), thereby effectively disabling the device. The device may then need to be reset by the user or a qualified technician, which may possibly incur inconvenience and/or cost for the user.

It is an object of the present invention to provide a power distribution apparatus which is operable to control the provision of power to peripheral devices in response to a change in operating state of an associated master device, while maintaining one or more of the peripheral devices in a standby state when the master device is off.

It is a further object of the present invention to provide a power distribution apparatus which is operable to interrupt power to a standby outlet in response to a detected fall in power drawn from a master outlet, and then automatically restore power to the standby outlet after a predetermined interval of time.

Some or all of the above objects are provided by embodiments of the present invention as described hereinafter.

According to one aspect of the present invention there is provided a power distribution apparatus comprising:
a master electrical outlet and at least one standby electrical outlet, both connectable to a common electrical power supply;
sensing means for detecting changes in the operating state of a master device; and
a controller for interrupting power to the at least one standby electrical
outlet in response to the sensing means detecting a change in operating state of the
master device from an "on" state to an "off" or "standby" state;
wherein following an interruption of power, the controller automatically restores power to the at least one standby electrical outlet after a predetermined interval of time.

According to another aspect of the present invention there is provided a method of power distribution comprising the steps of:
supplying electrical power to a master electrical outlet and at least one standby electrical outlet, both connected to a common electrical power supply;
detecting, via a sensing means, changes in the operating state of a master device;
interrupting the power to the at least one standby electrical outlet, via a controller, when the sensing means detects a change in operating state of the master device from an "on" state to an "off" state or "standby state;
wherein following an interruption of power, the controller automatically restores power to the at least one standby electrical outlet after a predetermined interval of time.

Embodiments of the present invention will now be described by way of example and with reference to the accompanying drawings in which:
Figure 1 is a schematic representation of a power distribution apparatus according to the present invention;
Figure 2a is a schematic representation of part of the power distribution apparatus according to figure 1;
Figure 2b shows a user input means according to the power distribution apparatus of figure 2a;
Figure 3 shows an arrangement of a suite of devices receiving power from a power distribution apparatus according to the present invention.
Figures 4(a)-(c) are perspective views of an alternative arrangement of the power distribution apparatus of the present invention.
Figures 5(a)-(c) are perspective views of another alternative arrangement of the power distribution apparatus.
Figures 6(a)-(c) are perspective views of another alternative arrangement of the power distribution apparatus.

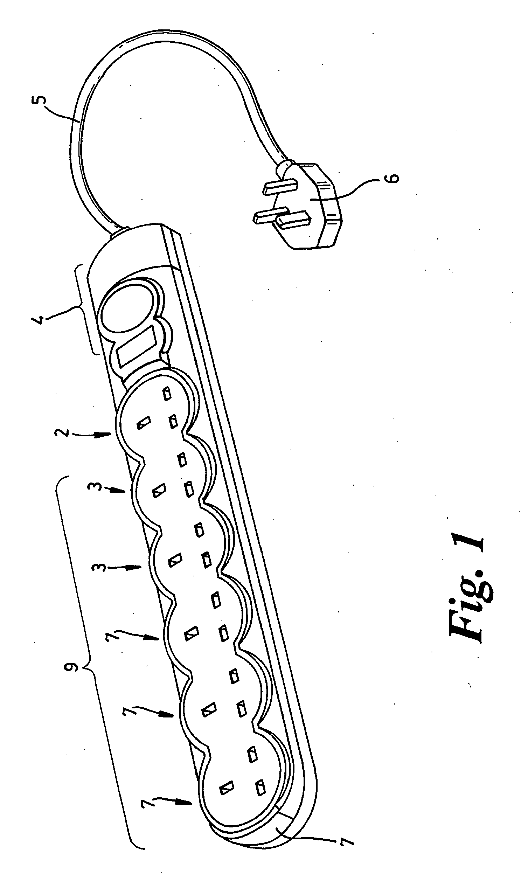

With reference to figure 1, there is shown a power distribution apparatus according to a particularly preferred embodiment of the present invention, comprising a trailing socket bank 1, including at least one master electrical outlet 2 and a plurality of secondary electrical outlets, generally denoted by 9. The master electrical outlet 2 is adapted to receive a master device, preferably by way of a conventional mains plug, and is operable to supply power to the master device whenever the socket bank 1 is connected to a power supply. The secondary electrical outlets 9 are each adapted to receive a peripheral device which is associated with the master device, again by way of a conventional mains plug.

In accordance with the present invention, at least one of the secondary electrical outlets 9 is a standby electrical outlet 3, while one or more of the other outlets may be slave electrical outlets 7.

It is to be appreciated that, although figure 1 shows the socket bank 1 as having two standby electrical outlets 3 and three slave electrical outlets 7, there may be any number of both kinds of outlets, provided there is at least one standby electrical outlet 3 and at least one master electrical outlet 2, both connectable to a common electrical power supply. In particular, a socket bank 1 having no slave electrical outlets 7 is also in accordance with the power distribution apparatus of the present invention.

Moreover, as described later, some of the secondary electrical outlets 9 may be configured to act as either a standby electrical outlet 3 or slave electrical outlet 7, depending on the particular use of the socket bank 1 and desired application.

The socket bank 1 is preferably connected to a mains electrical power supply by a flexible mains lead 5, which terminates at its distal end with a conventional mains plug 6 of a type suitable for use with electrical mains sockets.

It is to be appreciated that the socket bank 1 may be adapted to supply electrical power derived from any suitable power supply to the master electrical outlet 2, the slave electrical outlets 3 and the standby electrical outlets 7. Suitable power supplies include a battery, a generator or, most preferably, the mains.

Referring again to figure 1, in preferred embodiments, the region generally designated by 4 houses an internal controller which is operable to control the amount of power available to the secondary electrical outlets 9 based on the operating state of a master device (e.g. television etc.) connected to the master electrical outlet 2.

A controller suitable for use with the present power distribution apparatus is described in granted patent GB2398441 in the name of Peter Robertson, modified in accordance with the prescribed improvements of the present invention.

The controller is coupled to a sensing means (not shown), which is operable to detect changes in the operating state of the master device. In preferred embodiments, the sensing means is adapted to detect the changes in operating state of the master device by sensing power drawn from the master electrical outlet 2, as described in detail in the aforementioned granted GB patent. The sensing means preferably measures a resulting voltage developed across a load (of known resistance) by the current drawn through the master electrical outlet 2 by the master device.

It is to be appreciated that, any suitable method of estimating the power drawn from the master electrical outlet 2 may be used, in accordance with the apparatus of the present invention, including, but not limited to, inductive and thermal techniques.

In other preferred embodiments, the sensing means may alternatively be adapted to detect changes in an electrical signal derived from the master device, the changes in the signal corresponding to changes in the operating state of the master device. For example, in a home computing suite, the master device will typically be the PC itself which provides a number of standard interfaces and bus connectors from which a signal indicative of the current operating state of the PC may be derived. The electrical signal may therefore be an output voltage which is taken from one or more of the serial port, parallel port, Firewire port, ISA bus, PCI bus and universal serial bus (USB), with the sensing means being directly connected to the interface/bus by a hard wire connection.

Alternatively, the electrical signal may be in the form of an electromagnetic wave corresponding to one of the standard wireless protocols, such as WiFi and Bluetooth. In this arrangement, the sensing means could include a receiver which monitors wireless signals from the master device, so as to determine the current operating state of that device. By way of example, the master device could be a laptop or other portable computing device, having a USB dongle for wireless networking, and in which the sensing means monitors the signals from the dongle to determine whether the laptop has undergone a change in operating state.

In other embodiments, the socket assembly could be configured to use both power sensing and electrical signal monitoring, either independently or in combination, in order to determine changes in the operating state of the master device.

It is to be appreciated that any suitable means may be used to detect changes in the operating state of a master device, whether this be by direct interaction with the master device or by some other sensing technique. For example, in the case of the master device being a television or visual display unit (VDU), the radio frequency ("white") noise and/or magnetic field of the device could be remotely monitored by suitable sensors within the socket assembly.

The present controller has been modified to include a timing circuit, which is operable to be tripped, or triggered, by the interruption of electrical power to one or more of the standby electrical outlets 3, in response to the sensing means detecting a prescribed change in operating state of the master device connected to the master electrical outlet 2. The "prescribed change in operating state" of the master device typically corresponds to the situation when a user decides to turn the master device "off" or else place the master device into a "standby" state, from a state in which the master device is "on".

Herein, when the master device is "off" it is assumed that the device is no longer drawing power from the master electrical outlet 2, or else is drawing power at a negligibly low level. Whereas, when the master device is in a "standby" state, the device is consuming power at a reduced level, and is essentially in a sleeping state, awaiting instructions from a user so as to awaken and perform a desired task (e.g. a television or PC when in a standby state). An "on" state is taken to be when the master device is operating or functioning at a power level which is at, or close to, its maximum or normal power consumption, and is therefore significantly higher than both the "off" and "standby" state power levels.

Typically the power level of a standby state of a master device is of the order of several watts (W), but varies depending on the power consumption characteristics of the particular master device, and may be up to several tens of watts.

The timing circuit may any suitable circuit arrangement or integrated circuit that is capable of performing an incremental count (preferably in seconds or a suitable equivalent) up to a pre-set total, corresponding to a predetermined interval of time. Preferably, the timing circuit forms part of the controller circuitry (e.g. sharing the same circuit board), or alternatively, may be in the form of a separate module which is coupled to the controller circuitry within region 4 of socket bank 1.

In accordance with the particularly preferred embodiments, when the sensing means detects a fall in power drawn from the master electrical outlet 2, from an "on" state to an "off" or "standby" state, the controller acts to interrupt power to the one or more standby electrical outlets 3, thereby causing any peripheral devices connected thereto to be powered down alongside the master device.

Correspondingly, any slave electrical outlets 7 in the socket bank 1 are isolated from the power supply by the controller, so that any peripheral devices connected to them are also powered down alongside the master device and peripheral devices of the standby electrical outlets.

When the interruption of power to the one or more standby electrical outlets 3 occurs, the timing circuit preferably receives a start pulse (or any other suitable signal) from the controller, which thereby triggers the incremental count. The timing circuit continues to increase the count until a total count is attained which corresponds to the predetermined interval of time, whereupon the controller automatically restores power to the one or more standby electrical outlets 3.

In accordance with the preferred embodiments, the controller is adapted to restore power to each of the standby electrical outlets 3 by re-connecting the outlets to the mains supply, thereby providing power to the peripheral devices connected thereto. In this way a restored power is made available to the peripheral devices after only a temporary interruption of power, which therefore enables the peripheral devices to enter a respective standby state of operation if equipped to do so. As a result, the peripheral devices connected to the standby electrical outlets 3 are only without mains power for a period substantially equal to the predetermined interval of time.

During the power interruption, the peripheral devices connected to the standby electrical outlets 3, will (where fitted) revert to internal (back-up) batteries or capacitive discharge circuits, in order to maintain power to volatile storage and other power dependent circuits, e.g. clock and user defined settings. Of course, such back-up measures only have a finite period of operation, and therefore should power not be restored to the peripheral devices before the batteries are drained for instance, loss of settings and/or information will likely result.

Hence, the predetermined interval of time is preferably selected to be significantly shorter than the average back-up battery lifetime of the peripheral devices, so that any programmed settings or instructions held in volatile storage etc. are not lost when power is interrupted to the standby electrical outlets 3 (following the master device being turned off or powered down). In particular, in the case of set-top boxes, the automatic restoration of power provided by the present apparatus, prevents these devices from "locking-up" due to prolonged interruptions of power - thereby avoiding significant inconvenience, and possible cost, to the user.

In preferred embodiments, the timing circuit commences counting substantially after the moment the power is interrupted to the one or more standby electrical outlets 3. Alternatively, the timing circuit may be configured to be triggered substantially at the instant the sensing means detects the fall in power drawn from the master electrical outlet 2 by the master device. In either case, the timing circuit gives rise to a period of waiting corresponding to the predetermined interval of time. Preferably, the predetermined interval of time is greater than about 1 second, and is most preferably in the range of about 1 second to about 10 seconds.

The predetermined interval of time is preferably factory set in the timing circuit during fabrication of the power distribution apparatus. However, in alternative embodiments, the apparatus may include a selector switch (e.g. slide switch, rotary switch etc.) disposed on the casing of the socket bank 1, will allows a user to define the predetermined interval of time, by selecting one of several possible durations (e.g. 1, 10, 30, 100 seconds etc.).

The controller restores power to the standby electrical outlets 3 by preferably re-connecting the live rail of each outlet 3 to the mains supply, using a suitable switching device, preferably a relay.

It is to be appreciated that in alternative embodiments, the controller could be adapted to limit the current to one or more of the standby electrical outlets 3 upon restoration of power to the outlets, to thereby limit the power available to the peripheral devices connected thereto, depending on the particular application and suite of devices.

It is to be appreciated that, in accordance with the present invention, none of the slave electrical outlets 7 are provided with restored power after the predetermined interval of time. These outlets remain isolated from the power supply, until which time the master device is subsequently returned to an "on" state. Thereafter, power is made available to the peripheral devices connected to the slave electrical outlets 7, allowing the peripheral devices to be powered up once more.

The operation of the slave electrical outlets 7 is similar to that described in the granted patent GB2398441.

When the master device is turned on again, the controller acts to reconfigure the connections between the live rail of the standby electrical outlets 3 and the mains supply, so that the outlets 3 are able to provide power to the peripheral devices connected thereto, so that they can be turned on.

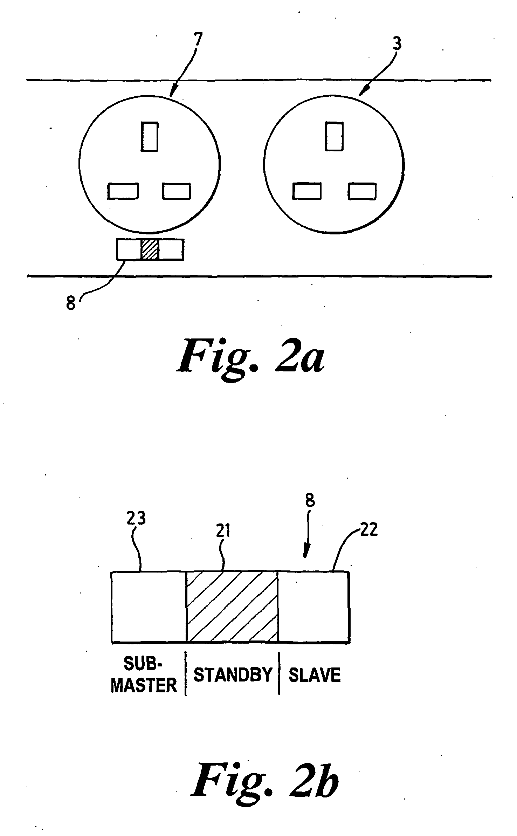

In accordance with the present invention, at least one of the secondary electrical outlets 9 is a standby electrical outlet 3, however in preferred embodiments, at least one of the other secondary outlets 9 may be configured by a user to be either a standby electrical 3 or a slave electrical outlet 7. Therefore, as shown in figure 2a, one or more of the secondary outlets 9 may have an associated user input means 8, which allows a user to configure the mode of the outlet, depending on the desired application and particular power requirements of the peripheral devices. In the example of figure 2a, one of the slave outlets 7 has been configured to act as a standby electrical outlet by using the user input means 8 to select the standby setting 21, as shown in figure 2b. Thereafter, the outlet will operate as a standby electrical outlet, in accordance with the foregoing embodiments of the present invention.

Preferably, the user input means 8 is a slide switch having at least two distinct positions, each corresponding to a particular mode 21-23. Each user input means 8 is coupled to the controller, which monitors the settings of the user input means 8 to determine the how each outlet is to be controlled during use. In alternative embodiments, the user input means 8 may be a rotary switch, or push button switch, in which repeated presses of the switch cycle through the available modes. Of course, any suitable selection device or switch may be used, provided a number of distinct positions may be selected, corresponding to the modes of operation of the outlet.

In preferred embodiments, the user input means 8 may also allow an outlet to be configured as a sub-master electrical outlet, such that the slide switch, for instance, is set in the sub-master setting 23. In this way, the power distribution apparatus is able to provide a further master electrical outlet having the properties as discussed in the foregoing embodiments, which may be useful when larger arrangements of suites of devices are to be used with the socket bank 1 of the present invention.

The sub-master electrical outlet may be operated independently of the permanent master electrical outlet 2, or else can be adapted to be dependent on the operation of the master device connected to the permanent outlet 2.

It is to be understood that, the user input means 8 may include less, or more, than three selectable modes depending on the particular requirements and application of the socket bank 1. A further possible mode may also be a "bypass" mode (not shown), which essentially configures an outlet to act independently of all the other outlets, such that it is able to provide power at all times while power is maintained to the socket bank 1. This particular mode would be useful where any interruption in power is not desirable, such as for providing power to network routers and communications devices e.g. modems.

In preferred embodiments, the user input means 8 may also comprise some form of visual notification means, preferably light emitting diode (LED) based, which indicates to a user the selected mode of the outlet. The visual notification means may comprise several differently coloured LEDs or else a single multi-colour LED, in which each one of the colours corresponds to a particular mode of operation of the outlet.

It is to be appreciated however, that any suitable form of visual notification means may be used to indicate the mode of operation.

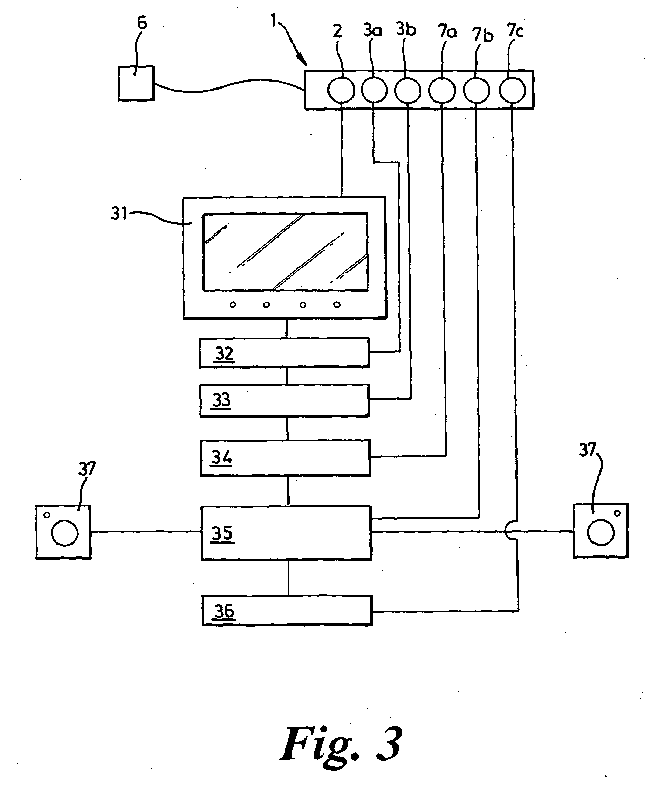

By way of example, the power distribution apparatus of the present invention is shown in schematic representation along with a suite of domestic home entertainment devices in figure 3. In this arrangement, two of the secondary electrical outlets 9 are standby electrical outlets 3a, 3b (one of which 3a is permanent and the other 3b may be a configurable outlet), and three are slave electrical outlets 7a, 7b, 7c (one or more of which may be configurable outlets). A television 31 is connected to the master electrical outlet 2 of the socket bank 1, and is coupled to a number of peripheral devices, including a set-top box 32 (e.g. a digital terrestrial, satellite or cable television receiver), a PVR 33, DVD player 34, an audio amplifier 35 and external speakers 37. Finally, a games console 36 may also be connected to the television 31 and some of the other devices.

When the socket bank 1 is attached to the mains supply, the master electrical outlet 2 is able to provide power directly to the television 31. At the instant the user switches the television into an "on" state, the socket bank 1 acts to supply power to the set-top box 32 and PVR 33, and DVD player 34, the amplifier 35 and the games console 36, by way of the standby outlets 3a, 3b and slave outlets 7a-c respectively. Hence, during normal use, power is provided to all the peripheral devices connected to the socket bank 1. However, when the user decides to turn off the television 31, the sensing means detects a fall in the power drawn from the master electrical outlet 2, thereby prompting the controller to disconnect the outlets 3a, 3b, 7a-c from the power supply, thereby powering down the peripheral devices 32-36.

At this time, the timing circuit is activated and commences the count, whereupon after expiry of the predetermined interval of time, power is automatically restored to the standby outlets 3a, 3b by the controller. The provision of power to the standby outlets 3a, 3b allows the set-top box 32 and PVR 33 to receive sufficient power to thereby enter a standby state of operation, if they are equipped to do so. In this way, the peripheral devices 32, 33 are then able to implement subsequent automatic timer recordings and other previously set instructions, by emerging from their respective standby states.

Advantageously, the restoration of power to the standby outlets 3a, 3b prevents the internal batteries of the peripheral devices 32, 33 from being drained while the master device is "off", and therefore prevents any loss of user defined settings or instructions, and possible locking-up of the devices.

Advantageously, the power distribution apparatus of the present invention may therefore be used to control a suite of peripheral devices associated with a master device (as shown in figure 3), some of which must receive at least a standby power even when the master device is off or in a standby state.

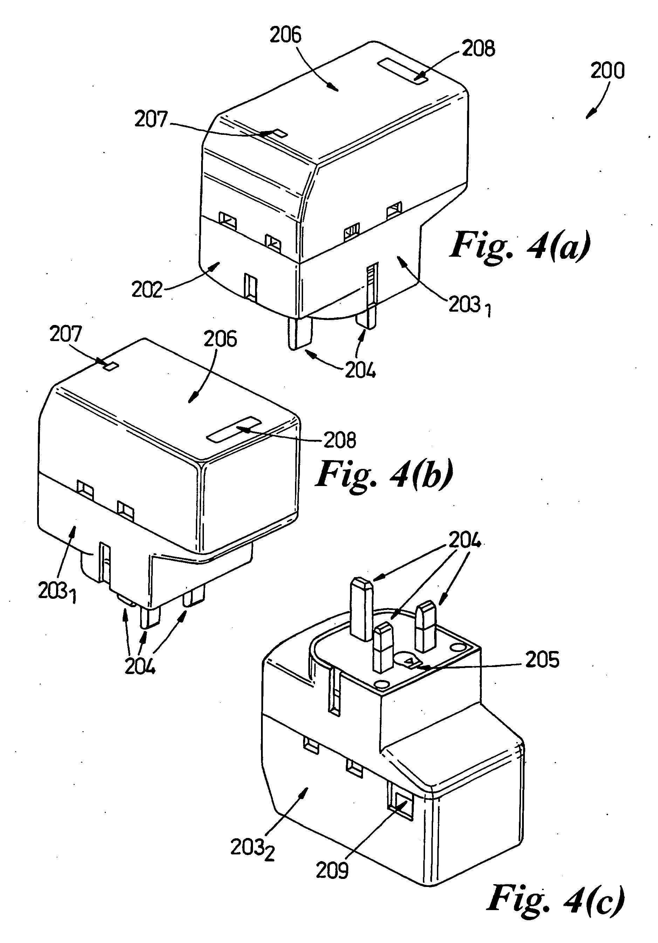

Although the power distribution apparatus of the present invention has been described in relation to a trailing socket bank 1, it is to be appreciated that the physical arrangement of the master, standby and slave electrical outlets can be configured into any suitable 3-dimensional geometrical shape and structure. Therefore, according to the present invention, there are shown in figures 4-6, example arrangements in which the power distribution apparatus has been configured into a substantially 'cubic' socket assembly, thereby offering considerable space saving advantages and convenience of use.

It is to be understood that these examples are not limiting, and therefore each serves as an illustration of one possible cubic configuration that may be adopted by the power distribution apparatus of the present invention.

Referring to figures 4(a)-(c), there are shown different views of a particularly preferred arrangement of the power distribution apparatus 200 (hereinafter referred to as the 'socket cube'): In this arrangement, there is one master electrical outlet 202, one standby electrical outlet 203₁ and one slave electrical outlet 203₂, each disposed on a respective orthogonal face of the socket cube 200. The standby and slave electrical outlets 203₁, 203₂ are respectively mounted on either side of the socket cube 200, with the master electrical outlet 202 being located on an orthogonal face therebetween.

For ease of use and reference for the user, the master electrical outlet 202 can be coloured coded and/or marked in some way, e.g. by applying a suitable paint or permanent transfer etc. to the corresponding face of the socket cube 200. In this way, the chances of the user inadvertently plugging a master device into a standby or slave electrical outlet can be significantly reduced.

The socket cube 200 includes integral electrical pin connectors 204, to permit insertion into a mains power supply socket. The pins 204 provide power to the master electrical outlet 202 and selectively to the standby and slave electrical outlets 203₁, 203₂, in accordance with the operation of the present controller. The master, standby and slave electrical connections (i.e. power rails) are enclosed within the socket cube 200, and a mains rated fuse 205 is included for electrical safety purposes.

For additional safety, the apertures associated with the master, standby and slave electrical outlets 202, 203₁, 203₂ may be covered by internal, retractable shutters, which mechanically retract whenever a master or slave device is inserted into a respective outlet In this way, the chances of inadvertently touching a power rail can be further minimised when inserting or removing devices. Moreover, the shutters provide an additional advantage that dust and other debris is prevented from getting inside of the socket cube 200 when not in use.

Referring again to figure 4(a), the area generally designated by 206 contains the internal controller, as described in detail in relation to the previous arrangements. The physical configuration of the controller will be understood to be dependent on the particular size and shape of the socket cube 200. Therefore, the configuration of the controller may differ slightly between different arrangements, depending on the components used.

To provide the user with a visual indication that the socket cube 200 is in use, a LED 207 is mounted on a surface of the cube. This can optionally be turned on whenever the cube receives power or only when a master device is inserted into the master electrical outlet 202. To permit easy viewing, the LED 207 is located on an outwardly facing surface of the cube (e.g. on a face substantially opposite to the pin connectors). Additional LEDs may be included to indicate the power status of the attached slave devices etc.

In accordance with earlier arrangements, the socket cube 200 can also include an infra-red sensor 208 which permits remote control of the cube via a suitable hand held device etc. Alternatively, other sensor types may be used including optical, ultrasonic and wireless (e.g. WiFi, Bluetooth). As shown in figure 4(a), the sensor 208 is mounted on the cube face that is opposite to the electrical pin connectors 204 (i.e. outwardly facing), so as to provide the widest angular coverage for detection of transmitted signals.

The socket cube 200 may also include one or more interface ports and/or connectors (e.g. USB, RS232, Firewire), as described in relation to earlier arrangements. In figure 4(c), the socket cube is illustrated as including a telephone jack connector 209, e.g. type RJ11. This connector can provide a connection to a telecommunications device, such as, but not limited to, a telephone, modem or fax machine etc. or alternatively, a network adaptor card.

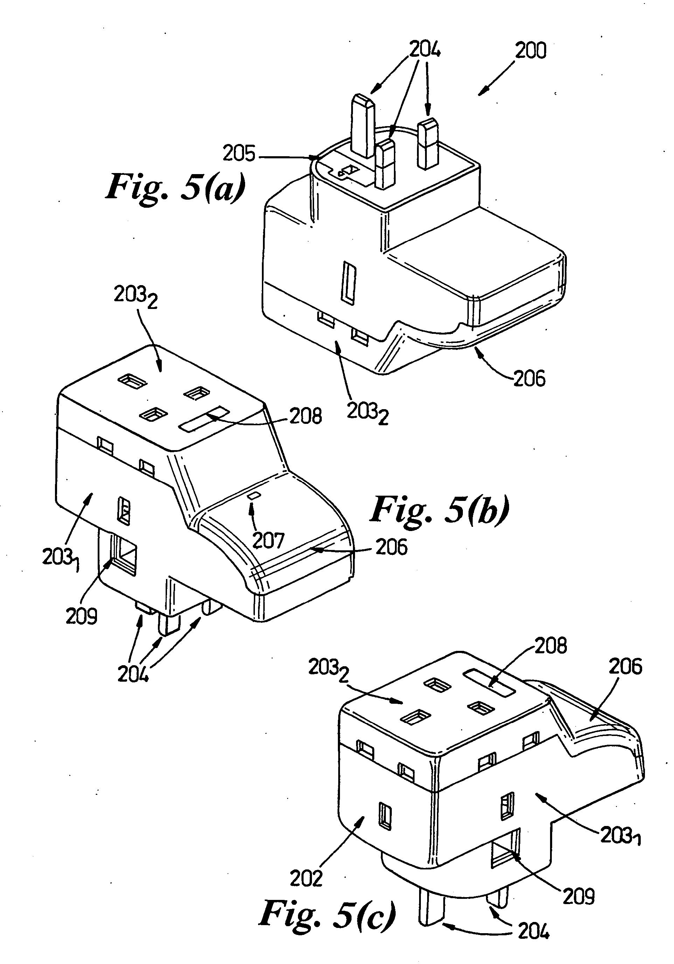

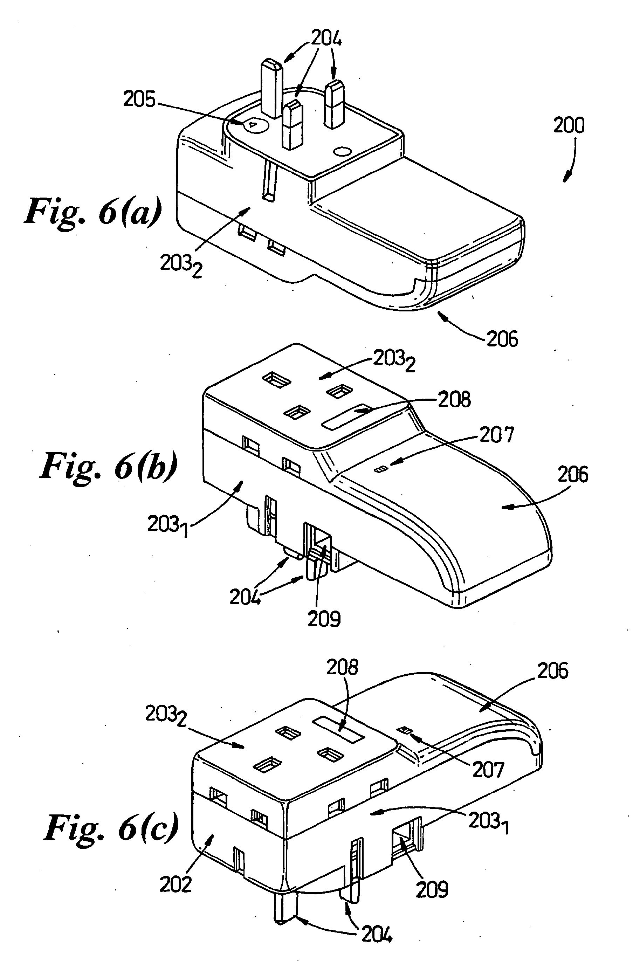

Referring to figures 5 and 6, there are illustrated other arrangements of the socket cube 200, with like features being labelled consistently with figure 4. In these arrangements, the socket cube comprises an elongated portion, denoted generally by 206, in which is housed the internal controller. In this way, additional space can be provided for a further outlet socket which may be an additional master 202, standby 203₁ or slave electrical outlet 203₂, as shown.

Other embodiments are possible within the scope of the accompanying claims.

## Claims

1. A power distribution apparatus comprising:
a master electrical outlet (2) and at least one standby electrical outlet (3), both connectable to a common electrical power supply;
sensing means for detecting changes in the operating state of a master device; and
a controller for interrupting power to the at least one standby electrical outlet (3) in response to the sensing means detecting a change in operating state of the master device from an "on" state to an "off" or "standby" state;
wherein following an interruption of power, the controller automatically restores power to the at least one standby electrical outlet after a predetermined interval of time.

2. The apparatus of claim 1, wherein the sensing means is adapted to detect changes in the operating state of the master device by sensing power drawn from the master electrical outlet (2) by the master device.

3. The apparatus of claim 2, wherein the change in operating state of the master device from an "on" state to an "off" or "standby" state corresponds to a fall in power drawn from the master electrical outlet (2) from a first, higher level, to a second, lower level.

4. The apparatus of claim 1, wherein the sensing means is adapted to detect changes in an electrical signal derived from the master device, the changes in the signal corresponding to changes in the operating state of the master device.

5. The apparatus of claim 4, wherein the electrical signal is an output voltage taken from one or more of a serial port, parallel port, Firewire port, ISA bus, PCI bus and universal serial bus (USB).

6. The apparatus of claim 4, wherein the electrical signal is an electromagnetic wave corresponding to one of the wireless protocols, WiFi and Bluetooth.

7. The apparatus of any preceding claim, wherein the controller is adapted to make available at the standby electrical outlet (3) a restored power level which is sufficient to provide at least a standby power to a peripheral device.

8. The apparatus of any preceding claim, wherein the predetermined interval of time commences substantially after the interruption of power to the at least one standby electrical outlet (3).

9. The apparatus of any preceding claim, wherein the predetermined interval of time is greater than about 1 second.

10. The apparatus of claim 9, wherein the predetermined interval of time is in the range of about 1 second to about 10 seconds.

11. The apparatus of any preceding claim, wherein the controller includes a timing circuit operable to be triggered by the interruption of power to the at least one standby electrical outlet (3).

12. The apparatus of any preceding claim, further comprising one or more slave electrical outlets (7) configured to be isolated from the power supply by the controller in response to a detected fall in power from the master electrical outlet (2).

13. The apparatus of claim 12, wherein at least one of the slave electrical outlets (7) has a configurable mode enabling a user to define the slave outlet (7) as a standby electrical outlet (3), thereby enabling power to be restored to the outlet (3) after the predetermined interval of time.

14. The apparatus of claim 13, wherein the configurable mode is defined by a user input means (8).

15. The apparatus of claim 14, wherein the user input means (8) is a slide switch having at least two distinct positions, each corresponding to a particular mode (21, 22, 23).

16. The apparatus of claim 14 or claim 15, wherein the user input means (8) has an associated visual notification means, having an output indicating the particular mode (21, 22, 23).

17. The apparatus of claim, 3, wherein the first level corresponds to a power level which is sufficient to provide operating power for a master device.

18. The apparatus of claim 3 or claim 17, wherein the second level corresponds to a power level which is substantially zero or sufficient to provide standby power for a master device.

19. A method of power distribution comprising the steps of:
supplying electrical power to a master electrical outlet (2) and at least one standby electrical outlet (3), both connected to a common electrical power supply,
detecting, via a sensing means, changes in the operating state of a master device;
interrupting the power to the at least one standby electrical outlet (3), via a controller, when the sensing means detects a change in operating state of the master device from an "on" state to an "off" or "standby" state;
wherein following an interruption of power, the controller automatically restores power to the at least one standby electrical outlet after a predetermined interval of time.

## Patentansprüche

1. Leistungsverteilungsvorrichtung mit:
einem elektrischen Master-Ausgang (2) und zumindest einem elektrischen Standby-Ausgang (3), wobei beide mit einer gemeinsamen Leistungsversorgung verbunden sind;
einem Sensormittel zum Erfassen von Änderungen in dem Betriebszustand einer Master-Vorrichtung; und
einer Steuerung zur Unterbrechung der Leistung an zumindest einen elektrischen Standby-Ausgang (3) in Abhängigkeit von dem Sensormittel, das eine Änderung im Betriebszustand der Master-Vorrichtung von einem "An"-Zustand zu einem "Aus"- oder zu einem "Standby"-Zustand erfasst;
wobei nachfolgend zu einer Unterbrechung der Leistung die Steuerung automatisch die Leistung zu dem zumindest einen elektrischen Standby-Ausgang wiederherstellt, nachdem eine bestimmte Zeitspanne verstrichen ist.

2. Vorrichtung nach Anspruch 1, bei der das Sensormittel ausgestaltet ist, um Änderungen im Betriebszustand der Master-Vorrichtung zu erfassen, indem die von dem elektrischen Master-Ausgang (2) an die Master-Vorrichtung abgezogene Leistung erfasst wird.

3. Vorrichtung nach Anspruch 2, bei der die Änderung im Betriebszustand der Master-Vorrichtung von einem "An"- zustand zu einem "Aus"- oder "Standby"-Zustand einem Abfallen der Leistung entspricht, die von dem elektrischen Master-Ausgang (2) entnommen wird, von einem ersten höheren Pegel auf einen zweiten niedrigeren Pegel.

4. Vorrichtung nach Anspruch 1, bei der das Sensormittel ausgestaltet ist, um Änderungen in einem elektrischen Signal zu erfassen, das von der Master-Vorrichtung hergeführt wird,
wobei die Änderungen in dem Signal Änderungen im Betriebszustand der Master-Vorrichtungen entsprechen.

5. Vorrichtung nach Anspruch 4, bei der das elektrische Signal eine Ausgabespannung ist, die aus einem oder mehreren seriellen Anschlüssen, parallelen Anschlüssen, Freewire Anschlüssen, ISA-Bus, PCI-Bus und Universal-Serial-Bus (USB) entnommen wird.

6. Vorrichtung nach Anspruch 4, bei der das elektrische Signal eine elektromagnetische Welle entsprechend einem der drahtlosen Protokolle gemäß WiFi oder Bluetooth ist.

7. Vorrichtung nach einem der vorangehenden Ansprüche, bei der die Steuerung ausgestaltet ist, um an dem elektrischen Standby-Ausgang (3) einen wiederherstellungsleistungspegel bereitzustellen, der ausreichend ist, um zumindest eine Standby-Leistung an eine externe Vorrichtung zu liefern.

8. Vorrichtung nach einem der vorangehenden Ansprüche, bei der die vorbestimmte zeitspanne im Wesentlichen nach der Unterbrechung der Leistung an den zumindest einen elektrischen Standby-Ausgang (3) beginnt.

9. Vorrichtung nach einem der vorangehenden Ansprüche, bei der die vorbestimmte Zeitspanne größer als etwa 1 Sekunde ist.

10. Vorrichtung nach Anspruch 9, bei der die vorbestimmte Zeitspanne im Bereich von etwa 1 Sekunde bis etwa 10 Sekunden ist.

11. Vorrichtung nach einen der vorangehenden Ansprüche, bei der die Steuerung, eine Zeitsteuerungsschaltung enthält, die betreibbar ist, um bei der Unterbrechung der Leistung an den zumindest einen elektrischen Standby-Ausgang (3) getriggert zu werden.

12. Vorrichtung nach einem der vorangehenden Ansprüche, die des Weiteren einen oder mehrere elektrische Slave-Ausgänge (7) umfasst, die ausgestaltet sind, um von der Leistungsvorsorgung durch die Steuerung in Abhängigkeit von einem erfassen Abfallen der Leistung von dem elektrischen Master-Ausgang (2) isoliert zu sein.

13. Vorrichtung nach Anspruch 12, bei der zumindest einer der elektrischen Slave-Ausgänge (7) einen konfigurierbaren Modus hat, der es einem Benutzer ermöglicht, den Slave-Ausgang (7) als elektrischen Standby-Ausgang (3) festzulegen, wodurch es ermöglicht wird, dass die Leistung an dem Ausgang (3) nach der bestimmten Zeitspanne wiederhergestellt wird.

14. Vorrichtung nach Anspruch 13, bei der der konfiguricrbare Modus mittels eines Benutzereingabemittels (8) festgelegt wird.

15. Vorrichtung nach Anspruch 14, bei der das Benutzereingabemittel (8) ein Schiebeschalter ist, der zumindest zwei unterschiedlich Positionen hat, wobei jede einem jeweiligen Modus (21, 22, 23) entspricht.

16. Vorrichtung nach Anspruch 14 und Anspruch 15, bei der das Benutzereingabemittel (8) ein zugeordnetes visuelles Mitteilungsmittel aufweist, mit einer Ausgabe, die den jeweiligen Modus (21, 22, 23) anzeigt.

17. Vorrichtung nach Anspruch 3, bei der der erste Pegel einem Leistungspegel entspricht, der ausreichend ist, um Betriebsleistung an eine Master-Vorrichtung zu liefern.

18. Vorrichtung nach Anspruch 3 oder Anspruch 17, bei der der zweite Pegel einem Leistungspegel entspricht, der im Wesentliche null ist oder der hinreichend ist, um Standby-Leistung an eine Master-Vorrichtung zu liefern.

19. Verfahren zur Leistungsverteilung mit den Schritte:
Anlegen elektrischer Leistung an einen elektrischen Master-Ausgang (2) und zumindest einen elektrischen Standby-Ausgang (3), die beide mit einer gemeinsamen elektrischen Leistungsvorsorgung verbunden sind;
Erfassen mittels eines Sensormittels von Änderungen in dem Betriebszustand einer Master-Vorrichtung;
Unterbrechen der Leistung an zumindest einem elektrischen Standby-Ausgang (3) über eine Steuerung, wenn das Sensormittel eine Änderung im Betriebszustand der Master-Vorrichtung von einem "An"-Zustand zu einem "Aus"- oder "Standby"-Zustand erfasst;
wobei nachfolgend zu einer Unterbrechung der Leistung die Steuerung automatisch die Leistung zu dem zumindest einen elektrischen Standby-Ausgang wiederherstellt, nachdem eine vorbestimmte Zeitspanne verstrichen ist.

## Revendications

1. Appareil de distribution de courant, comprenant :
une sortie électrique principale (2) et au moins une sortie électrique de secours (3), les deux pouvant être raccordées à une alimentation de courant électrique commune ;
des moyens de détection pour détecter des changements dans l'état de fonctionnement d'un dispositif principal ; et
un contrôleur pour couper le courant de la au moins une sortie électrique de secours (3) en réponse aux moyens de détection qui détectent un changement dans l'état de fonctionnement du dispositif principal d'un état de « marche » à un état « d'arrêt » ou « de secours » ;
dans lequel suite à une coupure de courant, le contrôleur rétablit automatiquement le courant de la au moins une sortie électrique de secours après un intervalle de temps prédéterminé.

2. Appareil selon la revendication 1, dans lequel les moyens de détection sont adaptés pour détecter des changements dans l'état de fonctionnement du dispositif principal en détectant le courant tiré de la sortie électrique principale (2) par le dispositif principal.

3. Appareil selon la revendication 2, dans lequel le changement de l'état de fonctionnement du dispositif principal d'un état de « marche » à un état « d'arrêt » ou « de secours » correspond à une chute du courant tiré de 1a sortie électrique principale (2) d'un premier niveau plus élevé à un second niveau inférieur.

4. Appareil selon la revendication 1, dans lequel les moyens de détection sont adaptés pour détecter des changements dans un signal électrique dérivé du dispositif principal, les changements du signal correspondant aux changements de l'état de fonctionnement du dispositif principal.

5. Appareil selon la revendication 4, dans lequel le signal électrique est une tension de sortie prise d'un ou plusieurs parmi un port série, un port parallèle, un port FireWire, un bus ISA, un bus PCI et un bus série universel (USB).

6. Appareil selon la revendication 4, dans lequel le signal électrique est une onde électromagnétique correspondant à l'un des protocoles sans fil, WiFi et Bluetooth.

7. Appareil selon l'une quelconque des revendications précédentes, dans lequel le contrôleur est adapté pour rendre disponible à la sortie électrique de secours (3), un niveau de courant rétabli qui est suffisant pour fournir au moins un courant de secours à un dispositif périphérique.

8. Appareil selon l'une quelconque des revendications précédentes, dans lequel l'intervalle de temps prédéterminé commence sensiblement après la coupure de courant de la au moins une sortie électrique de secours (3).

9. Appareil selon l'une quelconque des revendications précédentes, dans lequel l'intervalle de temps prédéterminé est supérieur à environ 1 seconde.

10. Appareil selon la revendication 9, dans lequel l'intervalle de temps prédéterminé est dans la zone d'environ 1 seconde à environ 10 secondes.

11. Appareil selon l'une quelconque des revendications précédentes, dans lequel le contrôleur comprend un circuit de synchronisation pouvant fonctionner pour être déclenché par la coupure de courant de la au moins une sortie électrique de secours (3).

12. Appareil selon l'une quelconque des revendications précédentes, comprenant en outre une ou plusieurs sorties électriques esclaves (7) configurées pour être isolées de l'alimentation de courant par le contrôleur en réponse à une chute détectée de courant de la sortie électrique principale (2).

13. Appareil selon la revendication 12, dans lequel au moins l'une des sorties électriques esclaves (7) a un mode configurable permettant à un utilisateur de définir la sortie esclave (7) en tant que sortie électrique de secours (3), permettant ainsi de rétablir le courant au niveau de la sortie (3) après l'intervalle de temps prédéterminé.

14. Appareil selon la revendication 13, dans lequel le mode configurable est défini par des moyens d'entrée utilisateur (8).

15. Appareil selon la revendication 14, dans lequel les moyens d'entrée utilisateur (8) sont un commutateur à coulisse ayant au moins deux positions distinctes, chacune correspondant à un mode particulier (21, 22, 23).

16. Appareil selon la revendication 14 ou la revendication 15, dans lequel les moyens d'entrée utilisateur (8) ont des moyens de notification visuelle associés, ayant une sortie indiquant le mode particulier (21, 22, 23).

17. Appareil selon la revendication 3, dans lequel le premier niveau correspond à un niveau de courant oui est suffisant pour fournir le courant de fonctionnement pour un dispositif principal.

18. Appareil selon la revendication 3 ou la revendication 17, dans lequel le second niveau correspond à un niveau de puissance qui est sensiblement nul ou suffisant pour fournir le courant de secours pour un dispositif principal.

19. Procédé de distribution de courant comprenant les étapes consistant à :
alimenter du courant électrique à une sortie électrique principale (2) et à au moins une sortie électrique de secours (3), les deux étant raccordées à une alimentation de courant électrique commune ;
détecter, via des moyens de détection, les changements de l'état de fonctionnement d'un dispositif principal ;
couper le courant à la au moins une sortie électrique de secours (3), via un contrôleur, lorsque les moyens de détection détectent un changement dans l'état de fonctionnement du dispositif principal d'un état de « marche » à un état « d'arrêt » ou « de secours » ;
dans lequel suite à une coupure de courant, le contrôleur rétablit automatiquement le courant à la au moins une sortie électrique de secours après un intervalle de temps prédéterminé.
